(19) Europäisches Patentamt / European Patent Office / Office européen des brevets

(11) **EP 1 470 325 B1**

(12) **EUROPÄISCHE PATENTSCHRIFT**

(45) Veröffentlichungstag und Bekanntmachung des Hinweises auf die Patenterteilung:
**24.10.2007 Patentblatt 2007/43**

(21) Anmeldenummer: **03731673.4**

(22) Anmeldetag: **15.01.2003**

(51) Int Cl.:
**F02D 41/34** *(2006.01)*

(86) Internationale Anmeldenummer:
**PCT/EP2003/000367**

(87) Internationale Veröffentlichungsnummer:
**WO 2003/062620 (31.07.2003 Gazette 2003/31)**

(54) **VERFAHREN ZUR BESTIMMUNG UND KOMPENSTION VON GEOMETRIEFEHLERN EINES DREHGEBERRADES**

METHOD FOR DETERMINING AND COMPENSATING THE GEOMETRIC ERRORS OF A ROTARY ENCODER

PROCEDE POUR DETERMINER ET COMPENSER DES ERREURS GEOMETRIQUES D'UNE ROUE D'ENCODEUR

(84) Benannte Vertragsstaaten:
**AT BE BG CH CY CZ DE DK EE ES FI FR GB GR HU IE IT LI LU MC NL PT SE SI SK TR**

(30) Priorität: **24.01.2002 DE 10202688**
**19.04.2002 DE 10217560**

(43) Veröffentlichungstag der Anmeldung:
**27.10.2004 Patentblatt 2004/44**

(73) Patentinhaber: **Fraunhofer-Gesellschaft zur Förderung der angewandten Forschung e.V. 80686 München (DE)**

(72) Erfinder:
• **FEHRENBACH, Hermann**
**76761 Rülzheim (DE)**
• **HOHMANN, Carsten**
**76131 Karlsruhe (DE)**

(74) Vertreter: **Rösler, Uwe**
**Rösler Patentanwaltskanzlei**
**Landsberger Strasse 480a**
**81241 München (DE)**

(56) Entgegenhaltungen:
DE-A- 19 622 042     US-A- 5 117 681
US-A- 5 789 658     US-A- 5 864 775
US-B1- 6 363 318

EP 1 470 325 B1

## Beschreibung

### Technisches Gebiet

Die Erfindung bezieht sich auf ein Verfahren zum Bestimmen von Geometriefehlern eines an einem Verbrennungsmotor applizierten Drehgeberrades mit einer Vielzahl von sensoriell erfassbaren Inkrementen, das an einer unmittelbar oder mittelbar durch die Gas- und Massenmomente des Verbrennungsmotors in Rotation versetzbaren Welle angebracht ist.

### Stand der Technik

An moderne Verbrennungsmotoren, wie sie vornehmlich im Kfz-Bereich eingesetzt werden, aber auch in anderen technischen Bereichen Verwendung finden, bspw. zur Stromerzeugung, werden zunehmend höhere Anforderungen in Bezug auf Komfort und Zuverlässigkeit gestellt. Aber auch aufgrund stetig strenger werdender Abgasnormen gilt es, das Betriebsverhalten derartiger Motoren möglichst genau zu überwachen, wobei in diesem Zusammenhang eine möglichst genaue Kenntnis über die aktuelle Drehzahl bzw. aktuelle Winkelgeschwindigkeit der Kurbelwelle von zentraler Bedeutung ist. Zum Zwecke der Erfassung der Kurbelwellenwinkelgeschwindigkeit wird in an sich bekannter Weise an der Kurbelwelle oder an der mit der Kurbelwelle in Wirkverbindung stehenden Nockenwelle des Verbrennungsmotors ein Drehgeberrad bzw. Inkrementgeber angebracht, dessen Rotationsgeschwindigkeit von einem berührungsfrei arbeitenden Aufnahmesystem erfasst wird. Das Erfassen der auf dem Drehgeberrad vorhandenen Markierungen bzw. Inkremente erfolgt typischerweise optisch oder induktiv.

Typischerweise zeichnen sich Drehgeberräder durch eine längs ihres Umfangsrandes vorhandene Zahnteilung aus, die eine Vielzahl vorzugsweise gleich voneinander beabstandeter Zähne, die sog. Inkremente, vorsieht. Bei Rotation derartiger Drehgeberräder wird im Aufnahmesystem eine in Abhängigkeit von der Winkelgeschwindigkeit des Drehgeberrades stehende zeitliche Abfolge von Messimpulsen erzeugt, anhand derer Maße für die aktuelle Winkelgeschwindigkeit der mit dem Drehgeberrad verbundenen Welle gewonnen werden können.

Jedoch weisen Drehgeberräder unvermeidbare Fehler auf, die auf fertigungstechnische Fehler, wie bspw. ungleiche Zahn- bzw. Inkrementteilung, oder montagebedingte Fehler, wie bspw. unzentrische Lagerung des Drehgeberrades auf der zu vermessenden Welle, zurückzuführen sind.

Derartige Fehler führen zu nicht tolerablen Abweichungen bei der hochgenauen Bestimmung der Winkelgeschwindigkeit der Kurbelwelle, so dass es gilt, den Fehlereinfluss auf ein Minimum zu reduzieren oder vollständig zu beseitigen.

Im Bestreben, derartige Fehler zu reduzieren sowie zu kompensieren, sind einige, jedoch nur unbefriedigende Lösungsansätze bekannt.

Aus der DE 196 22 448 A1 geht ein Drehzahlerfassungsverfahren zur Zündaussetzererkennung hervor, bei dem das Drehzahlverhalten der Kurbelwelle in vorbestimmten Winkelbereichen erfasst und als Maß für eine Laufunruhe definiert wird. Es werden Korrekturwerte durch Vergleich der ermittelten Laufunruhe mit einem vorbestimmten Referenzwert ermittelt, die für die weitere Drehzahlerfassung und deren Korrektur zugrunde gelegt werden. Hierbei erfolgt lediglich eine segmentweise, zylinderspezifische Korrektur des Drehzahlsignals.

In ähnlicher Weise erfolgt beim Verfahren zur Korrektur von Toleranzen eines Geberrades gemäß der DE 197 33 958 A1 ein Vergleich einzelner Messwerte mit einem Referenzwert zur Ermittlung geeigneter Korrekturwerte, die der genauen Bestimmung der Wellendrehzahl zugrunde gelegt werden. Auch in diesem Fall wird lediglich eine segmentweise Korrektur des Drehzahlsignals mit geringer Winkelauflösung durchgeführt.

In den beiden vorstehend genannten Fällen sind genaue Kenntnisse über die jeweiligen Verbrennungsmotoren erforderlich, um die für die Korrekturwertebestimmung notwendigen Referenzwerte zu ermitteln.

Aus der DE 4210 933 A1 ist ebenfalls ein Verfahren zur Auswertung der Ausgangssignale eines Drehzahlsensors zu entnehmen, bei dem zur Drehzahlbestimmung einer Welle jeweils mehrere Zählinkremente eines an der Welle sitzenden Drehgeberrades zusammengefasst werden, so dass die Winkelauflösung, mit der die Winkelgeschwindigkeit des Drehgeberrades erfasst wird, letztlich mit zunehmender Größe des sektoriellen Bereiches des Drehgeberrades, in dem die zur Messung zusammengefassten Zählinkremente vorhanden sind, abnimmt. Darüber hinaus bedarf es auch bei diesem Verfahren Motor- bzw. Drehgeberrad-individuelle Schwellwertvorgaben, die eine möglichst genaue Vorabkenntnis des Systems voraussetzen.

### Darstellung der Erfindung

Es besteht die Aufgabe, ein Verfahren zur Bestimmung von Geometriefehlern eines Drehgeberrades mit einer Vielzahl sensoriell erfassbarer Inkremente für einen Verbrennungsmotor derart anzugeben, dass mit möglichst einfachen Korrekturmitteln eine höchst exakte Fehlerbestimmung möglich sein soll. Insbesondere soll das Verfahren die Bestimmung der Geometriefehler inkrementaufgelöst ermöglichen, ohne dabei eine Vorabinformation über den Verbrennungsmotor oder das Drehgeberrad vorraussetzen zu müssen.

Die Lösung der der Erfindung zugrunde liegenden Aufgabe ist im Anspruch 1 und 2 angegeben. Den Erfindungsgedanken vorteilhaft weiterbildende Merkmale sind Gegenstand der Unteransprüche sowie der Beschreibung im Einzelnen zu entnehmen.

Diese Verfahren zur Bestimmung von Geometriefehlern eines Drehgeberrades mit einer Vielzahl von sensoriell erfassbaren Inkrementen für einen Verbrennungsmotor, das an einer unmittelbar oder mittelbar durch Gas- und Massenmomente des Verbrennungsmotors in Rotation versetzbaren Welle angebracht ist, benutzen bei einer zeitlich veränderlichen Wellendrehzahl eine Messung des Winkelgeschwindigkeitsverlaufes der Welle sowie eine Mittelung über die bei der Messung gewonnenen arbeitsspielsychronen Wellendrehzahlsignale.

Bei der Mittelung ist darauf zu achten, dass sie innerhalb eines Wellendrehzahlbereiches durchgeführt wird, in dem sich die im Verbrennungsmotor auf die Welle einwirkenden Gas- und Massenmomente gegenseitig zumindest weitgehend statistisch aufheben.

Das erfindungsgemäße Verfahren nutzt in vorteilhafter Weise die Gegenphasigkeit der Gas- und Massenmomente und deren Einfluss auf die Drehzahl der Kurbelwelle, um die Geometriefehler des Drehgeberrades bestimmen und kompensieren zu können.

In einer bevorzugten Verfahrensvariante wird das zeitliche Verhalten der Wellendrehzahl bzw. der Winkelgeschwindigkeit der Kurbelwelle oder der mit der Kurbelwelle kinematisch verbundenen Nockenwelle eines Verbrennungsmotors mit Hilfe eines Drehgeberrades und eines entsprechenden Aufnahmesystems während eines sog. Auslaufversuches betrachtet, d. h. der Verbrennungsmotor wird nach Erreichen einer hohen Drehzahl, bspw. seiner Höchstdrehzahl, abrupt abgestellt bzw. wird die Brennstoffzufuhr abrupt unterbunden. Aufgrund motorinterner Reibmomente reduziert sich die Drehzahl stetig, bis der Verbrennungsmotor zum Stillstand kommt.

Eingedenk der Tatsache, dass bei einem Verbrennungsmotor, der bei hohen Drehzahlen betrieben wird, die Auswirkungen der von den oszillierenden Komponenten herrührenden Massenmomente auf die Kurbelwelle gegenüber jenen der Gasmomente, d. h. der durch die Kompression und Expansion des Brennstoff-Luftgemisches (bzw. der Luft im Schubbetrieb) herrührenden Momente, dominieren und in umgekehrter Weise bei niedrigen Drehzahlen die Einflüsse der Gasmomente gegenüber denen der Massenmomente auf die Kurbelwelle dominieren, durchläuft der Verbrennungsmotor während des Auslaufversuches einen Drehzahlbereich, in dem sich die Auswirkungen der Massen- und Gasmomente gegenseitig kompensieren.

Eben jener Drehzahlbereich wird zur Bestimmung der Geometriefehler eines Drehgeberrades herangezogen, der sich jedoch alternativ zu dem vorstehend genannten Auslaufversuch auch im Zuge sog. Schleppoder Drückungsversuche ergibt, bei denen sich in gleicher Weise Massen- und Gasmomente in ihren Auswirkungen auf die Kurbelwelle bzw. Kurbelwellendrehzahl zumindest weitgehend statistisch aufheben. Handelt es sich bei dem jeweiligen Verbrennungsmotor um einen ungeradzahlig-zylindrigen Verbrennungsmotor, so ist aufgrund der Symmetrieverhältnisse bei derartigen Motoren die Forderung nach weitgehender statistischer Gleichverteilung der Auswirkungen der Gas- und Massenmomente auf die Kurbelwellenwinkelgeschwindigkeit nicht zwingend erforderlich, da das Drehzahlsignal zweier aufeinanderfolgender Umdrehungen eines Arbeitsspiels bei solchen Motoren von vornherein als gegenphasig bezeichnet werden kann. Deshalb ist in diesem Fall jede beliebige Messung als Basis für die Geberradadaption geeignet.

Im Einzelnen lässt sich die Geometriefehlerbestimmung eines Drehgeberrades in der nachstehenden Weise unter Bezugnahme auf die Figuren ohne Einschränkung des allgemeinen Erfindungsgedankens angeben. Es zeigen:

Fig. 1 schematisierte Darstellung eines hälftig dargestellten Drehgeberrades sowie

Fig. 2 schematisierter Ablaufplan der Geometriefehlerbestimmung.

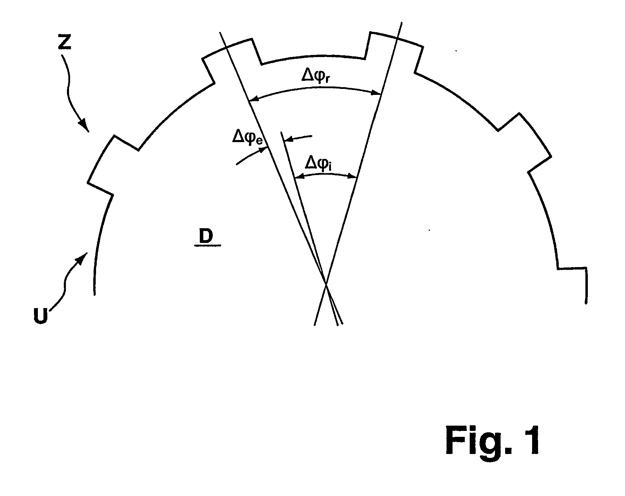

Ausgehend von einem Drehgeberrad D, das in Figur 1 schematisch in hälftiger Darstellung gezeigt ist und dessen Umfangsrand U eine Vielzahl einzelner, vorzugsweise voneinander gleich beabstandet angeordneter Zähne Z aufweist, werden folgende Bezeichnungen, auf die im Weiteren Bezug genommen wird, eingeführt. Es sei angenommen, dass sich ein für die Winkelinkrementmessung relevantes Bogenmaß $\Delta\varphi_r(z)$, auch als Winkelinkrement des realen Drehgeberrades bezeichnet, aus einem Anteil $\Delta\varphi_i$, der der Teilung eines als ideal angenommenen Drehgeberrades entspricht, und einem vom jeweiligen Winkelinkrement abhängigen Fehler $\Delta\varphi_e(z)$ zusammensetzt. In diesem Zusammenhang wird davon ausgegangen, dass das sensoriell erfassbare Winkelinkrement dem Mittenabstand zweier längs des Umfangsrandes U des Drehgeberrades D benachbart angeordneter Zähne Z entspricht. Somit gilt für das real erfassbare Winkelinkrement:

$$\Delta\varphi_r(z) = \Delta\varphi_i(z) + \Delta\varphi_e(z)\,.$$

Zur Bestimmung des von jedem Zahn bzw. Inkrement abhängigen inkrementellen Fehlers $\Delta\varphi_e(z)$ bedarf es daher der Ermittlung von $\Delta\varphi_r(z)$, sofern man unterstellt, dass der Wert für die ideale inkrementelle Teilung $\Delta\varphi_i$ als bekannt vorausgesetzt werden kann.

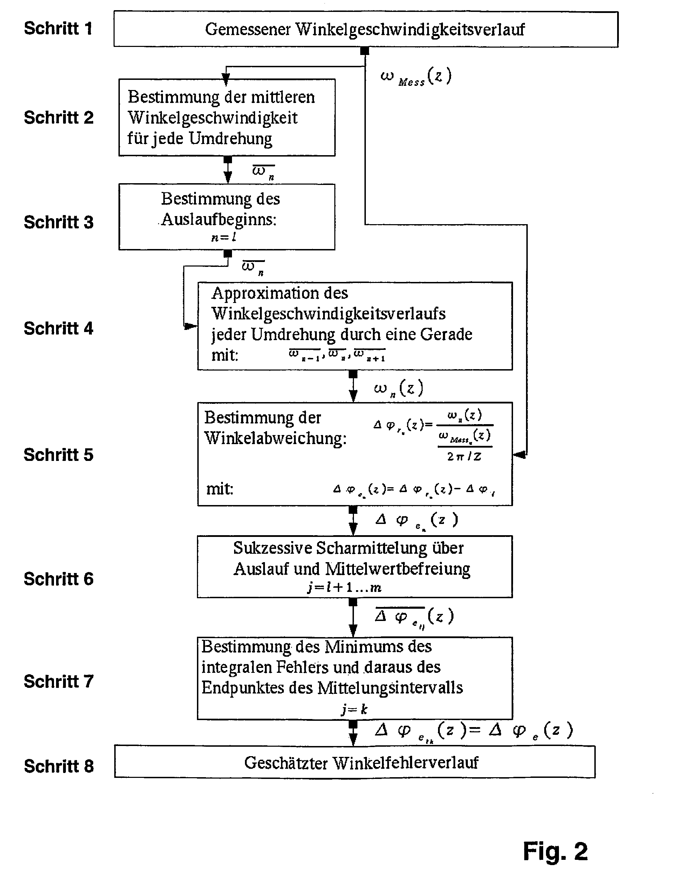

Ausgehend von vorstehenden Überlegungen sind zur Geometriefehlerbestimmung folgende einzelnen Verfahrensschritte durchzuführen, deren schematisierte Abfolge aus Figur 2 zu entnehmen ist. Zunächst gilt es, die Winkelgeschwindigkeit mit Hilfe des inkrementellen Drehgeberrades nebst Aufnehmer zu messen (Schritt 1). Durch die Messung wird ein zeitabhängiges Winkelgeschwindigkeitssignal $\omega_{Mess}(t)$ erhalten, auf dessen Basis eine mittlere Winkelgeschwindigkeit $\overline{\omega}_n$ pro Wellenumdrehung n zumindest näherungsweise berechnet wird (Schritt 2). Zur Bestimmung von $\overline{\omega}_n$ wird die

erfasste Zeitdauer $\Delta t_n$ zugrundegelegt, die das Drehgeberrad für eine vollständige Umdrehung benötigt. Somit ergibt sich für $\overline{\omega}_n$:

$$\overline{\omega}_n = \frac{360°}{\Delta t_n} .$$

Unter Zugrundelegung vorstehender Beziehung wird für jede Umdrehung n eines in Betracht kommenden Drehzahlbereiches die entsprechende mittlere Winkelgeschwindigkeit $\overline{\omega}_n$ berechnet. Für den vorstehend beschriebenen Fall der Durchführung eines Auslaufversuches mit einem Verbrennungsmotor bedeutet dies die Berechnung der mittleren Winkelgeschwindigkeit $\overline{\omega}_n$ für jede Umdrehung n des Verbrennungsmotors, beginnend mit der Höchstdrehzahl und endend mit dem Stillstand des Verbrennungsmotors (Schritt 3). Mit den damit ermittelten mittleren Winkelgeschwindigkeiten $\overline{\omega}_n$ pro Umdrehung n wird ein mittlerer Winkelgeschwindigkeitsverlauf gebildet, der als Streckenzug angenähert wird, dessen Steigung bei der Umdrehung n sich aus der mittleren Winkelgeschwindigkeit $\overline{\omega}_{n-1}$ der vorherigen Umdrehung und der Winkelgeschwindigkeit $\overline{\omega}_{n+1}$ der folgenden Umdrehung ergibt (Schritt 4).

Der mit Hilfe der vorstehenden Geradenapproximation erhaltene mittlere Winkelgeschwindigkeitsverlauf kann überdies in vorteilhafter Weise mittels geeigneter Polynome angeglichen werden, wodurch die Genauigkeit für eine Abschätzung des tatsächlichen mittleren Drehzahlverlaufes verbessert werden kann. Auf diese Weise wird der Winkelgeschwindigkeitsverlauf $\omega_n(z)$ pro Umdrehung n für jeden einzelnen Zahn Z bzw. jedes Inkrement als Solldrehzahlverlauf erhalten, indem die Inkrement (z) bezogene Winkelgeschwindigkeit $\omega_n(z)$ als Funktionswert der durch das Polynom beschriebenen Funktion unmittelbar entnommen wird.

Auf Basis des Winkelgeschwindigkeitsverlaufes $\omega_n(z)$ wird im Weiteren für jede Umdrehung n das reale Winkelinkrement $\Delta\varphi_{r_n}(z)$ für jeden einzelnen Zahn in folgender Weise berechnet (Schritt 5):

$$\Delta\varphi_{r_n}(z) = \frac{\omega_n(z)}{f_{Zahn_n}(z)} = \frac{\omega_n(z)}{\dfrac{\omega_{mess_n}(z)}{2\pi / z}}$$

Unter Zugrundelegung der messtechnisch pro Umdrehung erfassten Zahn- bzw. Inkrementfrequenz $f_{Zahn_n}$ (liegt als Messwert für jedes Drehgeberradinkrement bzw. jeden Zahn pro Umdrehung vor), die ins Verhältnis mit der berechneten Solldrehzahl $\omega_n(z)$ gesetzt wird, wird das fehlerbehaftete, pro Umdrehung ermittelbare Winkelinkrement $\Delta\varphi_{r_n}$ erhalten, von dem zur Berechnung des tatsächlichen geometrischen Winkelfehlers $\Delta\varphi_e(z)$ letztlich der Anteil der idealen Inkrementteilung $\Delta\varphi_i(z)$ subtrahiert werden muss: $\Delta\varphi_e(z) = \Delta\varphi_{r_n}(z) - \Delta\varphi_i(z)$.

Da die vorstehend beschriebene Berechnung des Winkelfehlerverlaufes $\Delta\varphi_e(z)$ auf der Basis der Berechnung des mittleren Winkelgeschwindigkeitsverlaufes $\omega_n(z)$ beruht, werden jedoch die durch die zyklische Arbeitsweise des Verbrennungsmotors bedingten Drehzahlschwankungen, die letztlich durch das Wechselspiel der auf die Kurbelwelle einwirkenden Massen- und Gasmomente herrühren, zunächst ebenfalls als Winkelfehler mit interpretiert. Die auf den Massen- und Gasmomenten beruhenden Drehzahlschwankungen fließen aufgrund der vorstehenden Mittelung zur Berechnung des Winkelgeschwindigkeitsverlaufes $\omega_n(z)$ fehlerbehafteterweise in die vorstehenden Überlegung zur Ermittlung des Geometriefehlers $\Delta\varphi_e(z)$ ein. Um diesen Einfluss zu beseitigen bzw. weitgehend zu eliminieren wird eine Mittelung, vorzugsweise eine Scharmittelung über die geschätzten Winkelfehlerverläufe $\Delta\varphi_e(z)$ pro Umdrehung für einen bestimmten Drehzahlbereich des Auslaufversuches durchgeführt, bei dem sich die auf die Gas- und Massenmomente zurück gehenden Signalanteile gegenseitig kompensieren. Für eine derartige Scharmittelung ergibt sich folgender Formelzusammenhang (Schritt 6):

$$\Delta\varphi_{e_n}(z) = \frac{1}{k-l}\sum_{n=l}^{k}\left[\frac{\omega_n(z)}{f(z)} - \Delta\varphi_i(z)\right]$$

mit

| | |
|---|---|
| $\Delta\varphi_{e_n}(z)$ | inkrementeller Winkelfehler pro Umdrehung |
| $\omega_n(z)$ | inkrementelle Winkelgeschwindigkeit pro Umdrehung |
| $f(z)$ | Inkrementfrequenz |
| $\Delta\varphi_i(z)$ | Winkelinkrement für ideales Inkrement |
| $k,l$ | Umdrehungsindizes bei unterer und oberer Drehzahlgrenze |

Die für die Scharmittelung relevanten unteren und oberen Drehzahlgrenzen (Umdrehungsindizes k und 1) werden derart gewählt, dass sich die Auswirkungen der Massen- und Gasmomente auf die Kurbelwelle, durch die die vorstehend genannten Drehzahlschwankungen hervorgerufen werden, innerhalb des betrachteten Drehzahlbereiches zueinander gegenphasig verhalten, so dass sich der hieraus sich ergebende Signalanteil gerade näherungsweise herausmittelt.

Zum Auffinden der optimalen Mittelungsgrenzen k, 1 sind zwei unterschiedliche Methoden anwendbar (Schritt 7):

  1. Bei der Durchführung eines Auslaufversuches wird zunächst jene Sprungdrehzahl aufgesucht, bei der ein Phasensprung im Wellendrehzahlsignal bedingt durch einen Wechsel der Dominanz zwischen Gas- und Massenmomenten auftritt. Der nun festzulegende Drehzahlbereich, innerhalb dem die Scharmittelung durchgeführt wird, ergibt sich durch eine geeignete symmetrische oder asymmetrische Festlegung bestimmter Anzahlen von Umdrehungen vor und nach der Sprungdrehzahl derart, dass ein im Drehzahlsignal enthaltener Wechselanteil nach der Mittelung möglichst klein wird. Idealerweise könnten symmetrische Drehzahlgrenzen um die aufgefundene Sprungdrehzahl gewählt werden, jedoch ist aufgrund der unterschiedlichen Amplituden des Wechselanteils des Drehzahlsignals in Abhängigkeit der jeweiligen Umdrehung n eine individuelle Grenzenwahl zumeist erforderlich.

2. Eine andere Möglichkeit der Drehzahlgrenzenwahl besteht darin, zunächst den inkrementellen Winkelfehler $\Delta\varphi_{e_n}$ (z) ausgehend von einem bestimmten Startpunkt I als Funktion des Endpunktes k zu ermitteln. Nun gilt es, eben jenen Drehzahlbereich auszuwählen, in dem der Winkelfehler am kleinsten ist. Wird der Winkelfehlerverlauf bspw. relativ zu einer Nulllinie aufgetragen, so sind die geeigneten Intervallgrenzen gerade um jenen Bereich zu wählen, in dem die vom Winkelfehlerverlauf mit der Nulllinie eingesschlossene Fläche am kleinsten ist. Bei falsch gewähltem Intervall sind im geschätzten Winkelfehler noch sichtbare Signalanteile der Gas- und Massenmomente vorhanden. Diese Signalanteile führen jedoch zu einer Vergrößerung der Fläche. Die aus der graphischen Überlegung basierende Intervallgrenzenbestimmung ist sowohl für eine manuelle als auch für eine rechnergestützte automatische Durchführung geeignet.

Bei einer automatischen Intervallgrenzenbestimmung wird zunächst eine "Startdrehzahl", sinnvollerweise der Beginn des Auslaufversuches bei der Höchstdrehzahl, bestimmt. Die Scharmittelung wird anschließend ausgehend von dieser "Startdrehzahl" Schritt haltend mit jeder Umdrehung durchgeführt. Auf diese Weise ergibt sich für jede Umdrehung n eine Schar gemittelter geschätzter Winkelfehlerverläufe. Am Ende des Auslaufversuches wird ein geeigneter Winkelfehlerverlauf gewählt, der die kleinste Fläche mit der vorstehend beschriebenen Nulllinie einschließt. Die gleiche Prozedur kann mehrmals wiederholt werden, um die "Startdrehzahl" sowie "Enddrehzahl" zu optimieren.

Durch die vorstehend erläuterte Scharmittelung können jegliche die Fehlerberechnung verfälschende Nutzsignalanteile, die systembedingt einen Wechselanteil im Winkelgeschwindigkeitsverlauf verursachen, wenn nicht vollständig beseitigt, so doch weitgehend reduziert werden. Als Ergebnis erhält man eine hochpräzise Fehlerangabe für jedes einzelne Inkrement des Drehgeberrades pro Umdrehung. Mögliche, die Fehlerbestimmung verfälschende Einflüsse von Seiten des Messaufnehmers können, falls vorhanden, kompensiert werden und entsprechende Berücksichtigung finden.

Der mit dem vorstehenden Verfahren ermittelte Geometriefehler eines Drehgeberrades dient in vorteilhafter Weise zur Korrektur bzw. Kompensation bei der Drehzahlbestimmung von Verbrennungsmotoren unter Verwendung inkrementieller Drehgeberräder. Somit ergibt sich der kompensierte Winkelgeschwindigkeitsverlauf $\omega_{comp}$ der mit einem Drehgeberrad erfassten Rotation einer Kurbelwelle eines Verbrennungsmotores in folgender Weise (Schritt 8):

$$\omega_{comp} = \frac{\Delta\varphi_r(z)}{f_{Zahn}(z)}$$

Alternativ zu dem vorstehend erläuterten Auslaufversuch, bei dem ein Verbrennungsmotor nach Erreichen einer Höchstdrehzahl abgeschaltet und das Drehzahlverhalten bis zum Stillstand vermessen wird, können auch beliebig andere Messbedingungen, bei denen eine ausreichend große Variation in der Phasenbeziehung zwischen Massen- und Gasmomenten auftritt, als Basis für die Geometriefehlerbestimmung dienen. An dieser Stelle seien Schlepp- und Drückungsversuche sowie die Leerlaufmessung bei hoher Drehzahl genannt. Jedoch stellen gerade die Auslaufversuche wegen der fehlenden Verbrennung und der einfachen Durchführbarkeit einen idealen Messmodus dar.

Handelt es sich jedoch bei den zu untersuchenden Verbrennungsmotoren um Motoren mit ungerader Zylinderanzahl, so ist aufgrund der Symmetrieverhältnisse jede beliebige Messung als Basis für die Geberradadaption geeignet, da bei derartigen Motoren das Drehzahlsignal bezüglich zweier aufeinander folgender Umdrehungen eines Arbeitsspiels als gegenphasig bezeichnet werden kann.

## Bezugszeichenliste

D     Drehgeberrad
Z     Zahn, Inkrement
U     Umfangsrand

## Patentansprüche

1. Verfahren zum Bestimmen von Geometriefehlern eines Drehgeberrades mit einer Vielzahl von sensoriell erfassbaren Inkrementen für einen Verbrennungsmotor, das an einer unmittelbar oder mittelbar durch Gas- und Massenmomente des Verbrennungsmotors in Rotation versetzbaren Welle angebracht ist,

**dadurch gekennzeichnet, dass** bei einer zeitlich veränderlichen Wellendrehzahl eine Messung des Winkelgeschwindigkeitsverlaufes $\omega_{mess}(t)$ der Welle sowie eine Mittelung über die bei der Messung gewonnenen Wellendrehzahlsignale durchgeführt wird, wobei die Mittelung eine Scharmittelung ist, die über die auf das Inkrement (z) bezogenen Winkelgeschwindigkeiten $\omega_n(z)$ pro Inkrement (z) und Wellenumdrehung (n) unter Zugrundelegung folgender Beziehung durchgeführt wird, durch die als Geometriefehler ein inkrementeller Winkelfehler pro Umdrehung angegeben wird:

$$\Delta\varphi_{e_n}(z) = \frac{1}{k-l}\sum_{n=l}^{k}\left[\frac{\omega_n(z)}{f(z)} - \Delta\varphi_i(z)\right]$$

mit

$\Delta\varphi_{e_n}(z)$ inkrementeller Winkelfehler pro Umdrehung
$\omega_n(z)$ inkrementelle Winkelgeschwindigkeit pro Umdrehung
$f(z)$ Inkrementfrequenz
$\Delta\varphi_i(z)$ Winkelinkrement für ideales Inkrement
$k,l$ Umdrehungsindizes bei unterer und oberer Drehzahlgrenze

dass die Mittelung innerhalb eines Wellendrehzahlbereiches durchgeführt wird, in dem sich die Auswirkungen der im Verbrennungsmotor auf die Welle einwirkenden Gas- und Massenmomente auf die Kurbelwellenwinkelgeschwindigkeit gegenseitig zumindest weitgehend statistisch aufheben, wobei der Wellendrehzahlbereich derart gewählt wird, dass zunächst jene Sprungdrehzahl aufgesucht wird, bei der ein Phasensprung im Wellendrehzahlsignal bedingt durch einen Wechsel an Dominanz zwischen Gas- und Massenmomenten auftritt, und dass der Drehzahlbereich derart um diese Sprungdrehzahl gewählt wird, dass ein im Drehzahlsignal enthaltener Wechselanteil nach dessen Mittelung möglichst klein wird, und dass auf der Grundlage des Winkelgeschwindigkeitsverlaufes $\omega_{mess}(t)$ Geometriefehler des Drehgeberrades ermittelt werden.

**2.** Verfahren zum Bestimmen von Geometriefehlern eines Drehgeberrades mit einer Vielzahl von sensoriell erfassbaren Inkrementen für einen Verbrennungsmotor, das an einer unmittelbar oder mittelbar durch Gas- und Massenmomente des Verbrennungsmotors in Rotation versetzbaren Welle angebracht ist,
**dadurch gekennzeichnet, dass** bei einer zeitlich veränderlichen Wellendrehzahl eine Messung des Winkelgeschwindigkeitsverlaufes $\omega_{mess}(t)$ der Welle sowie eine Mittelung über die bei der Messung gewonnenen Wellendrehzahlsignale durchgeführt wird, wobei die Mittelung eine Scharmittelung ist, die über die auf das Inkrement (z) bezogenen Winkelgeschwindigkeiten $\omega_n(z)$ pro Inkrement (z) und Wellenumdrehung (n) unter Zugrundelegung folgender Beziehung durchgeführt wird, durch die als Geometriefehler ein inkrementeller Winkelfehler pro Umdrehung angegeben wird:

$$\Delta\varphi_{e_n}(z) = \frac{1}{k-l}\sum_{n=l}^{k}\left[\frac{\omega_n(z)}{f(z)} - \Delta\varphi_i(z)\right]$$

mit

$\Delta\varphi_{e_n}(z)$ inkrementeller Winkelfehler pro Umdrehung
$\omega_n(z)$ inkrementelle Winkelgeschwindigkeit pro Umdrehung
$f(z)$ Inkrementfrequenz
$\Delta\varphi_i(z)$ Winkelinkrement für ideales Inkrement
$k,l$ Umdrehungsindizes bei unterer und oberer Drehzahlgrenze

dass die Mittelung innerhalb eines Wellendrehzahlbereiches durchgeführt wird, in dem sich die Auswirkungen der im Verbrennungsmotor auf die Welle einwirkenden Gas- und Massenmomente auf die Kurbelwellenwinkelgeschwindigkeit gegenseitig zumindest weitgehend statistisch aufheben, wobei der Wellendrehzahlbereich derart gewählt wird, dass der inkrementelle Winkelfehler $\Delta\varphi_{e_n}(z)$ als Funktion der Drehzahl ermittelt wird und jener Drehzahlbereich ausgewählt wird, in dem der Winkelfehler am kleinsten ist, und dass auf der Grundlage des Winkelgeschwindigkeitsverlaufes $\omega_{mess}(t)$ Geometriefehler des Drehgeberrades ermittelt werden.

**3.** Verfahren nach Anspruch 1 oder 2,
**dadurch gekennzeichnet, dass** ausgehend von dem gemessenen Winkelgeschwindigkeitsverlauf $\omega_{mess}(t)$ eine mittlere Winkelgeschwindigkeit $\overline{\omega}_n$ pro Wellenumdrehung (n) zumindest näherungsweise berechnet wird.

**4.** Verfahren nach Anspruch 3,
**dadurch gekennzeichnet, dass** aus der mittleren Winkelgeschwindigkeit $\overline{\omega}_n$ eine Inkrement (z) bezogene Winkelgeschwindigkeit $\omega_n(z)$ zumindest näherungsweise berechnet wird.

**5.** Verfahren nach Anspruch 4,
**dadurch gekennzeichnet, dass** aus wenigstens zwei berechneten mittleren Winkelgeschwindigkei-

ten $\overline{\omega}_{n-1}$ und $\overline{\omega}_{n+1}$ die Inkrement (z) bezogene Winkelgeschwindigkeit $\omega_n(z)$ berechnet wird.

6. Verfahren nach Anspruch 4 oder 5,
**dadurch gekennzeichnet, dass** der Verlauf der Inkrement (z) bezogenen Winkelgeschwindigkeit $\omega_n$ (z) durch ein Polynom zumindest angenähert wird.

7. Verfahren nach Anspruch 6,
**dadurch gekennzeichnet, dass** die Inkrement (z) bezogene Winkelgeschwindigkeit $\omega_n(z)$ als Funktionswert der durch das Polynom beschriebenen Funktion entnommen wird.

8. Verfahren nach einem der Ansprüche 1 bis 7,
**dadurch gekennzeichnet, dass** die zeitlich veränderliche Wellendrehzahl im Rahmen eines Auslauf-, Schlepp- oder Drückungsversuches erhalten wird.

9. Verfahren nach einem der Ansprüche 1 bis 8,
**dadurch gekennzeichnet, dass** der erhaltene Geometriefehler in Form eines inkrementellen Winkelgeometriefehlers $\Delta\varphi_{e_n}$ (z) zur Korrektur bei der Drehzahlbestimmung des Verbrennungsmotors verwendet wird.

**Claims**

1. A method for determining geometric errors of a rotary encoder with a plurality of increments that can be registered by a sensor, with said encoder being used in an internal combustion engine and being mounted on a shaft that can be directly or indirectly set in motion by moments of inertia or engine gas, **characterized in that** the angular speed profile $w_{mess}(t)$ of the shaft is measured at a time-variable shaft speed and the shaft speed signals obtained during the measurement are averaged, wherein the averaging is a family averaging that is carried out as a function of the increment (z)-related angular speeds $\omega_n(z)$ per increment (z) and shaft revolution (n) based on the following relationship, by means of which a geometric error is expressed in the form of an incremental angular error per revolution:

$$\Delta\varphi_{e_n}(z) = \frac{1}{k-l}\sum_{n=l}^{k}\left[\frac{\omega_n(z)}{f(z)} - \Delta\varphi_i(z)\right]$$

with

$\Delta\phi_{en}$(z) incremental angular error per revolution
$\omega_n$(z) incremental angular speed per revolution
*f(z)* increment frequency
$\Delta\phi_i$(z) angular increment for ideal increment

k, *l* rotational indices at lower and upper speed limit,

**in that** the averaging is carried out within a shaft speed range, in which the effects of the moments of inertia or engine gas, which act upon the shaft in the internal combustion engine, on the angular speed of the crankshaft at least largely cancel each other out statistically, wherein said shaft speed range is selected such that initially a surge speed is sought, at which a phase shift in the shaft speed signal occurs due to a change in the dominance between gas moments and moments of inertia, **in that** the speed range is selected around this surge speed such that an alternating component contained in the speed signal is as small as possible after its averaging, and **in that** geometric errors of the rotary encoder are determined based on the angular speed profile $\omega_{mess}(t)$.

2. A method for determining geometric errors of a rotary encoder with a plurality of increments that can be registered by a sensor, with said encoder being used in an internal combustion engine and being mounted on a shaft that can be directly or indirectly set in motion by moments of inertia or engine gas, **characterized in that** the angular speed profile $\omega_{mess}(t)$ of the shaft is measured at a time-variable shaft speed and the shaft speed signals obtained during the measurement are averaged, wherein the averaging is a family averaging that is carried out as a function of the increment (z)-related angular speeds $\omega_n(z)$ per increment (z) and shaft revolution (n) based on the following relationship, by means of which a geometric error is expressed in the form of an incremental angular error per revolution:

$$\Delta\varphi_{e_n}(z) = \frac{1}{k-l}\sum_{n=l}^{k}\left[\frac{\omega_n(z)}{f(z)} - \Delta\varphi_i(z)\right]$$

with

$\Delta\phi_{en}$(z) incremental angular error per revolution
$\omega_n$(z) incremental angular speed per revolution
*f(z)* increment frequency
$\Delta\phi_i$(z) angular increment for ideal increment
k, *l* rotational indices at lower and upper speed limit,

**in that** the averaging is carried in within a shaft speed range, in which the effects of the moments of inertia or engine gas, which act upon the shaft in the internal combustion engine, on the angular speed of the crankshaft at least largely cancel each other out statistically, wherein said shaft speed range is selected such that the incremental angular error $\Delta\phi_{en}(z)$ is determined as a function of the speed and the speed range in which the angular error is smallest is selected, and **in that** geometric errors of the rotary encoder are determined based on the angular speed profile $\omega_{mess}(t)$.

3. The method according to Claim 1 or 2, **characterized in that** an average angular velocity $\overline{\omega}_n$ per shaft revolution (n) is calculated at least approximately based on the measured angular speed profile $\omega_{mess}(t)$.

4. The method according to Claim 3, **characterized in that** an increment (z)-related angular speed $\omega_n(z)$ is calculated at least approximately from the average angular speed $\overline{\omega}_n$.

5. The method according to Claim 4, **characterized in that** the increment (z)-related angular speed $w_n(z)$ is calculated from at least two calculated average angular speeds $\overline{\omega}_{n-1}$ and $\overline{\omega}_{n+1}$.

6. The method according to Claim 4 or 5, **characterized in that** the profile of the increment (z)-related angular speed $\omega_n(z)$ is at least approximated by means of a polynomial.

7. The method according to Claim 6, **characterized in that** the increment (z)- related angular speed $\omega_n(z)$ is obtained in the form of a function value from the function described by the polynomial.

8. The method according to one of Claims 1 to 7, **characterized in that** the time-variable shaft speed is obtained as part of a coast-down, a towing or a compression test.

9. The method according to one of Claims 1 to 8, **characterized in that** the obtained geometric error in the form of an incremental angular geometric error $\Delta\phi_{en}(z)$ is used for correction when determining the speed of the internal combustion engine.

**Revendications**

1. Procédé pour déterminer des défauts de géométrie d'une roue d'encodeur, avec une pluralité d'incréments susceptibles d'être enregistrés par capteurs pour un moteur à combustion interne, qui est monté sur un arbre directement ou indirectement déplaçable en rotation par des couples de gaz ou des couples de masses du moteur à combustion interne, **caractérisé en ce que** lors d'une vitesse de rotation variable dans le temps, une mesure de la courbe de vitesse angulaire $\omega_{mess}(t)$ de l'arbre, ainsi qu'un calcul de la moyenne des signaux de vitesse de rotation de l'arbre obtenus lors de la mesure sont réalisés, le calcul de la moyenne étant une moyenne de toutes les valeurs possibles, que l'on réalise sur des vitesses angulaires rapportées aux incréments $\omega_n(z)$, par incrément (z) et par rotation de l'arbre (n), en prenant pour base la relation suivante, indiquant en tant que défaut de géométrie un défaut angulaire incrémentiel par rotation

$$\Delta\varphi_{e_n}(z) = \frac{1}{k-l}\sum_{n=l}^{k}\left[\frac{\omega_n(z)}{f(z)} - \Delta\varphi_i(z)\right]$$

avec

$\Delta\phi_{en}(z)$ défaut angulaire incrémentiel par rotation
$\omega_n(z)$ vitesse angulaire incrémentielle par rotation
$f(z)$ fréquence incrémentielle
$\Delta\phi_i(z)$ incrément angulaire pour incrément idéal
$k,l$ indice de rotation à la limite de vitesse inférieure et supérieure

**en ce que** le calcul de la moyenne est réalisé dans une plage de vitesses de rotation de l'arbre dans laquelle les répercussions sur la vitesse angulaire du vilebrequin des couples de gaz et de masses agissant sur l'arbre dans le moteur à combustion interne s'annulent au moins largement de façon statique, la plage de vitesses de rotation de l'arbre étant choisie de sorte que soit d'abord recherchée la vitesse de rotation subite, à laquelle se produit un saut de phase dans le signal de vitesse de rotation de l'arbre, conditionné par un changement de la dominance entre les couples des gaz et des masses et **en ce que** la plage de vitesses de rotation est choisie aux alentours de ladite vitesse de rotation subite, de sorte qu'une fraction de changement contenue dans le signal de vitesse de rotation soit la plus petite possible, après le calcul de sa moyenne, et **en ce que**, sur la base de la courbe de vitesses angulaires $\omega_{mess}(t)$ des défauts de géométrie de la roue d'encodeur sont déterminés.

2. Procédé pour déterminer des défauts de géométrie d'une roue d'encodeur, avec une pluralité d'incréments susceptibles d'être enregistrés par capteurs pour un moteur à combustion interne, qui est monté sur un arbre directement ou indirectement déplaçable en rotation par des couples de gaz ou des couples de masse du moteur à combustion interne, **caractérisé en ce que** lors d'une vitesse de rotation variable dans le temps, une mesure de la courbe de vitesse angulaire $\omega_{mess}(t)$ de l'arbre, ainsi qu'un calcul de la moyenne des signaux de vitesse de rotation de l'arbre obtenus lors de la mesure sont réalisés, le calcul de la moyenne étant une moyenne de toutes les valeurs possibles, que l'on réalise sur des vitesses angulaires rapportées aux incréments $\omega_n(z)$, par incrément (z) et par rotation de l'arbre (n), en prenant pour base la relation suivante, indiquant en tant que défaut de géométrie un défaut angulaire incrémentiel par rotation

$$\Delta\varphi_{e_n}(z) = \frac{1}{k-l}\sum_{n=l}^{k}\left[\frac{\omega_n(z)}{f(z)} - \Delta\varphi_i(z)\right]$$

avec

$\Delta\phi_{en}(z)$ défaut angulaire incrémentiel par rotation

$\omega_n(z)$ vitesse angulaire incrémentielle par rotation

$f(z)$ fréquence incrémentielle

$\Delta_{\phi i}(z)$ incrément angulaire pour incrément idéal

$k,l$ indice de rotation à la limite de vitesse inférieure et supérieure

en ce que le calcul de la moyenne est réalisé dans une plage de vitesses de rotation de l'arbre dans laquelle les répercussions sur la vitesse angulaire du vilebrequin des couples de gaz et des couples de masses agissant sur l'arbre dans le moteur à combustion interne s'annulent au moins largement de façon statique, la plage de vitesses de rotation de l'arbre étant choisie de sorte que le défaut angulaire incrémentiel $\Delta\phi_i(z)$ soit déterminé en tant que fonction de la vitesse de rotation et que soit choisie la plage de vitesses de rotation dans laquelle le défaut angulaire est le plus petit, et

**en ce que** sur la base de la courbe de vitesses angulaires $\omega_{mess}(t)$ des défauts de géométrie de la roue d'encodeur soient déterminés.

3. Procédé selon la revendication 1 ou 2, **caractérisé en ce que**, sur la base de la courbe de vitesses angulaires mesurée $\omega_{mess}(t)$, on calcule au moins approximativement une vitesse angulaire moyenne $\overline{\omega}_n$ par rotation de l'arbre (n).

4. Procédé selon la revendication 3, **caractérisé en ce que**, à partir de la vitesse angulaire moyenne $\overline{\omega}_n$, on calcule au moins approximativement une vitesse angulaire $\omega_n(z)$ rapportée à un incrément (z).

5. Procédé selon la revendication 4, **caractérisé en ce que**, à partir d'au moins deux vitesses angulaires moyennes calculées $\overline{\omega}_{n-1}$ et $\overline{\omega}_{n+1}$, on calcule la vitesse angulaire $\omega_n(z)$ rapportée à un incrément (z) .

6. Procédé selon la revendication 4 ou 5, **caractérisé en ce qu'**on fait au moins une approximation par un polynôme de la courbe de la vitesse angulaire $\omega_n(z)$ rapportée à un incrément (z).

7. Procédé selon la revendication 6, **caractérisé en ce qu'**on relève la vitesse angulaire $\omega_n(z)$ rapportée à un incrément (z) en tant que valeur fonctionnelle de la fonction décrite par le polynôme.

8. Procédé selon l'une quelconque des revendications 1 à 7, **caractérisé en ce qu'**on obtient la vitesse variable dans le temps de l'arbre dans le cadre d'un essai de ralentissement, d'un essai de remorquage ou d'un essai de poussée.

9. Procédé selon l'une quelconque des revendications 1 à 8, **caractérisé en ce qu'**on utilise le défaut de géométrie obtenu sous la forme d'un incrémentiel défaut de géométrie angulaire $\Delta\phi_{en}(z)$ , pour la correction lors de la détermination du régime du moteur à combustion interne.

Fig. 1

**Schritt 1** | Gemessener Winkelgeschwindigkeitsverlauf

$$\omega_{Mess}(z)$$

**Schritt 2** | Bestimmung der mittleren Winkelgeschwindigkeit für jede Umdrehung

$$\overline{\omega}_n$$

**Schritt 3** | Bestimmung des Auslaufbeginns: $n = l$

$$\overline{\omega}_n$$

**Schritt 4** | Approximation des Winkelgeschwindigkeitsverlaufs jeder Umdrehung durch eine Gerade mit: $\overline{\omega}_{n-1}, \overline{\omega}_n, \overline{\omega}_{n+1}$

$$\omega_n(z)$$

**Schritt 5** | Bestimmung der Winkelabweichung: $\Delta\varphi_{r_n}(z) = \dfrac{\dfrac{\omega_n(z)}{\omega_{Mess_n}(z)}}{2\pi/Z}$

mit: $\Delta\varphi_{e_n}(z) = \Delta\varphi_{r_n}(z) - \Delta\varphi_r$

$$\Delta\varphi_{e_n}(z)$$

**Schritt 6** | Sukzessive Scharmittelung über Auslauf und Mittelwertbefreiung $j = l+1 \ldots m$

$$\overline{\Delta\varphi_{e_{ij}}}(z)$$

**Schritt 7** | Bestimmung des Minimums des integralen Fehlers und daraus des Endpunktes des Mittelungsintervalls $j = k$

$$\Delta\varphi_{e_{ik}}(z) = \Delta\varphi_e(z)$$

**Schritt 8** | Geschätzter Winkelfehlerverlauf

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19622448 A1
- DE 19733958 A1

- DE 4210933 A1